## Europäisches Patentamt

## European Patent Office

## Office européen des brevets

(19)

(11) Veröffentlichungsnummer: **0 010 193**

**B1**

(12)

# EUROPÄISCHE PATENTSCHRIFT

(45) Veröffentlichungstag der Patentschrift: **22.06.83**

(51) Int. Cl.³: **G 06 F 9/26,** G 06 F 13/00

(21) Anmeldenummer: **79103609.8**

(22) Anmeldetag: **24.09.79**

(54) **Einrichtung zur Steuerung der Zykluszeit für einen Mikroprozessor mit Steuerspeichern unterschiedlicher Verarbeitungsgeschwindigkeit.**

(30) Priorität: **23.10.78 US 953674**

(43) Veröffentlichungstag der Anmeldung:
**30.04.80 Patentblatt 80/9**

(45) Bekanntmachung des Hinweises auf die Patenterteilung:
**22.06.83 Patentblatt 83/25**

(84) Benannte Vertragsstaaten:
**DE FR GB**

(56) Entgegenhaltungen:
**US - A - 3 964 027**

**XEROX DISCLOSURE JOURNAL, Vol. 2, Nr. 6,
November-Dezember 1977,
Stamford,
POWERS: "Dual speed micro-processor", Seite
95**

**IBM TECHNICAL DISCLOSURE BULLETIN, Vol.
7, Nr. 9, Februar 1965,
New York, US,
PITKONSKY: "Data processing system clock
control", Seiten 754—755**

(73) Patentinhaber: **International Business Machines
Corporation
Armonk, N.Y. 10504 (US)**

(72) Erfinder: **Berglund, Neil Clair
Rt. 1, Box 74H
Kasson, MN 55944 (US)**
Erfinder: **Burchfield Jr., John Roland
658 Horihan Court SW
Rochester, MN 55901 (US)**

(74) Vertreter: **Möhlen, Wolfgang, Dipl.-Ing.
c/o International Business Machines Corporation
Zürich Patent Operations Säumerstrasse 4
CH-8803 Rüschlikon/ZH (CH)**

(56) Entgegenhaltungen:
**ELECTRICAL DESIGN NEWS, Vol. 20, Nr. 20,
November 1975,
Denver, US,
FRANKENBERG: "Designer's guide to:
Semiconductor memories — Part 7", Seiten
59—70**

## Einrichtung zur Steuerung der Zykluszeit für einen Mikroprozessor mit Steuerspeichern unterschiedlicher Verarbeitungsgeschwindigkeit

Die Erfindung betrifft datenverarbeitende Einrichtungen, insbesondere eine Einrichtung zur Steuerung der Zykluszeit eines Mikroprozessors, um dessen Zykluszeit an die Verarbeitungsgeschwindigkeit desjenigen Steuerspeichers anzupassen, zu welchem der nächste Zugriff erfolgt.

In datenverarbeitenden Systemen kann der Befehlsvorrat für den Benutzer in Maschinensprache gerätemässig vorgegeben sein. Er kann aber auch dadurch interpretiert werden, dass eine Folge von Mikroinstruktionen ausgeführt wird, die über einen Mikroprozessor laufen. Wenn anstelle von gerätemässig vorgegebenen Mikroinstruktionen Mikroprozessoren verwendet werden, dann besteht für den Entwicklungsingenieur und den Programmierer die Frage der Auswahl eines für den verwendeten Mikroprozessor geeigneten schnellen Steuerspeichers. Denn die Grösse des Steuerspeichers und die für ihn aufzuwendenden Kosten sollten innerhalb praktischer Grenzen liegen.

Eine bekannte Möglichkeit für eine günstige Ausnutzung bei der Speicherbelegung besteht in der Anwendung der sogenannten Ueberlagerung. Bei dieser Speicherbelegunstechnik befindet sich ein Teil des Mikroprogramms in einem Steuerspeicher, während der übrige Teil im Hauptspeicher gehalten wird. Je nach Bedarf wird der benötigte Teil des Mikroprogramms von Hauptspeicher in den Steuerspeicher gebracht. Bei diesem Verfahren kann der benutzte Steuerspeicher kleiner sein als ein Speicher, der notwendig wäre, um alle Mikroprogamme zu enthalten, die in dem Computersystem gebraucht werden. Ein Nachteil dieser Methode besteht jedoch darin, dass der Hauptspeicher erheblich langsamer als der Steuerspeicher arbeitet, weshalb eine beträchtliche Zeit dafür verwendet werden muss, nichtresidente Mikroprogramme wieder aufzufinden.

Eine andere bekannte Methode verwendet einen Steuerspeicher, der genügend Speicherraum aufweist, um alle Mikroprogramme zu speichern. Aus Kostengründen wählt man dann jedoch einen Speicher, der unpraktisch langsam arbeitet. Ausserdem sind solche langsamen Speicher gewöhnlich sogenannte dynamische Speicher, die periodisch wieder aufgefrischt werden müssen, um ihren Speicherinhalt behalten zu können. Diese Notwendigkeit der Wiederauffrischung der Information verlangt, dass zeitweilig die Arbeitsabläufe des Mikroprozessors unterbrochen werden müssen, solange der Steuerspeicher wieder aufgefrischt wird.

So besteht Bedarf für eine Einrichtung zur Ueberwachung oder zur Steuerung von Steuerspeichern in einer datenverarbeitenden Anlage, welche die obenerwähnten Schwierigkeiten beheben kann. Solch eine Einrichtung sollte mit unterschiedlicher Arbeitsgeschwindigkeit sowohl mit schnellen als auch mit langsamen Steuerspeichern zusammenarbeiten können. Auch sollte diese Einrichtung mit den Schaltkreisen verträglich sein, welche den Speicherinhalt wieder auffrischen, und sie sollte die Zykluszeit des Mikroprozessors an die Arbeitsgeschwindigkeit des gerade gebrauchten Steuerspeichers anpassen. Auch sollte diese Einrichtung zeitweilig die Ausführung von Mikroinstruktionen des Mikroprozessors unterbrechen, solange der Inhalt des Steuerspeichers wieder aufgefrischt wird.

Es sind schon Datenverarbeitungsanlagen mit unterschiedlichen Speichern bekannt geworden.

Das USA Patent 3,964,027 beschreibt eine Anordnung, bei der Mikroinstruktionen in zwei verschiedenen Speichern gespeichert sind, welche gemeinsame Register benutzen. Aus der jeweils vorliegenden Mikroinstruktionsadresse wird festgestellt, zu welchem Speicher zuzugreifen ist, um dann Schaltwege zwischen den gemeinsamen Registern und dem zu benutzenden Speicher durchzuschalten. Es wird aber nicht beschrieben, wie bei unterschiedlicher Arbeitsgeschwindigkeit der Speicher eine Anpassung der Zeitsteuerung für einen Prozessor erfolgen kann.

Der Artikel "Dual Speed Microprocessor" von G. L. Powers, veröffentlicht im Xerox Disclosure Journal, Vol. 2, No. 6, Nov./Dez. 1977, Seite 95 zeigt einen Mikroprozessor mit zwei Speichern unterschiedlicher Geschwindigkeit. Die Arbeitsgeschwindigkeit des Mikroprozessors wird dem jeweils benutzten Speicher angepasst, indem als Steuerimpulse entweder die Ueberlaufimpulse eines laufenden Zählers, oder bei ständig rückgestellt gehaltenem Zähler direkt die Zählimpulse verwendet werden. Es wird aber nicht gezeigt, wie die Steuersignale für den Zähler im Mikroprozessor erzeugt werden.

Im Artikel "Data Processing System Clock Control" von S. Pitkowsky et al., erschienen im IBM Technical Disclosure Bulletin, Vol. 7, No. 9, Februar 1965, Seiten 754 und 755, ist eine Anlage erwähnt, in der ein gemeinsamer Prozessor mit mehreren Hauptspeichern verschiedener Geschwindigkeit zusammenarbeiten kann, indem einzelne Prozessortaktimpulse blockiert werden, um Unterschiede in der Zugriffszeit zu berücksichtigen.

In keiner der Publikationen ist offenbart, wie mit Hilfe der gespeicherten Information, d.h. der ausgelesenen Mikroinstruktionsadressen, die Mikroprozessorzykluszeit einfach und optimal ausgewählt werden kann, und wie trotz gelegentlich notwendiger Auffrischung des Speicherinhalts eines von zwei unterschiedlichen Speichern ein möglichst geringer Verlust an effektiver Bearbeitungszeit erreicht wird.

Der Erfindung liegt die Aufgabe zugrunde, für die von der Speichergeschwindigkeit abhängige Zykluszeitsteuerung des Mikroprozessors eine günstige, auch für kleine Systeme brauchbare Lösung zu finden.

Die Erfindung ist im Anspruch 1 definiert. Sie ermöglicht bei Auffrischung des einen Speichers eine Weiterarbeit mit dem anderen Speicher, und sie ermöglicht bei einer auffrischbedingten Sperre mit Hilfe rasch aufeinanderfolgender Abfrageimpulse eine möglichst baldige Wiederaufnahme der Mikroprozessorarbeit nach der Auffrischung.

Zweckmässige Ausführungsformen dreser Einrichtung zur Steuerung der Zykluszeit sind durch die in den abhängigen Patentansprüchen dargelegten Merkmale charackterisiert.

Die Erfindung wird im folgenden anhand von Ausführungsbeispielen mit Hilfe der Zeichnungen näher erläutert.

Fig. 1 ist ein Blockschaltbild der Einrichtung zur Steuerung der Zykluszeit für einen Mikroprozessor.

Fig. 2 ist ein Blockschaltbild eines Teiles der Zeitgebersteuerschaltung der Einrichtung.

Fign. 3a bis 3g sind Zeitablaufdiagramme für die Zeitgebersteuerschaltung gemäss der Fig. 2.

Fig. 4 ist ein weiteres Blockschaltbild eines Teiles der Zeitgebersteuerschaltung.

Fig. 5a bis 5f sind Zeitablaufdiagramme der Arbeitsweise der Sperrschaltung gemäss der Fig. 2.

Fign. 6a bis 6j sind Zeitablaufdiagramme für die in der Fig. 4 dargestellten Schaltkreise.

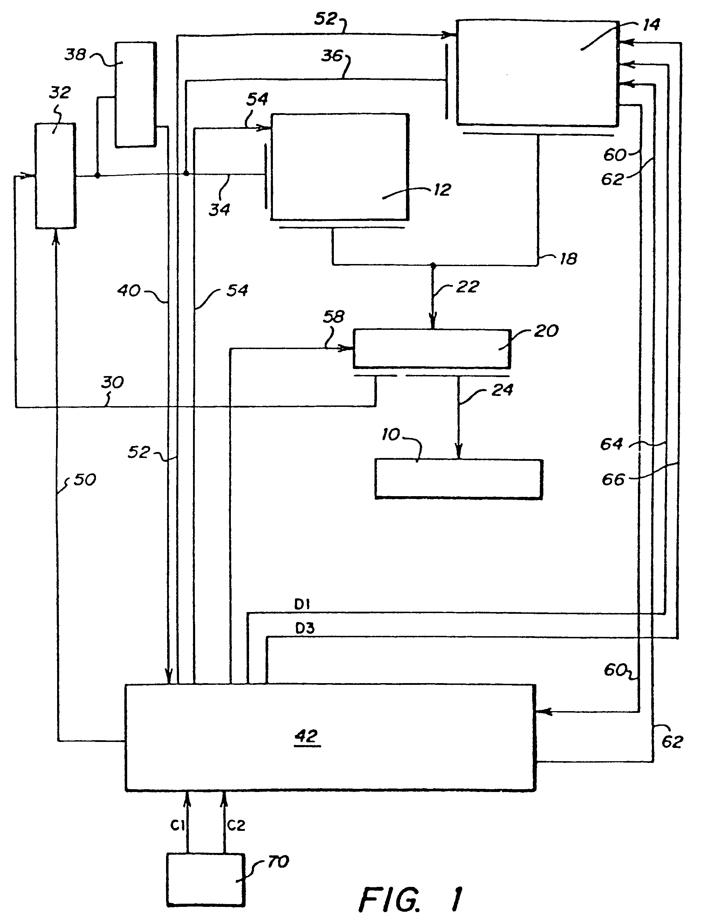

In der Fig. 1 ist ein Mikroprozessor 10 mit zugeordneten Steuerspeichereinheiten 12 und 14 dargestellt. Die Speichereinheit 12 umfasst einen schnellen Steuerspeicher, der das Mikroprogramm enthält, das die Instruktionen höherer Ordnung eines Benutzerprogramms interpretiert und ausführt. Die Speichereinheit 12 enthält die am meisten gebrauchten Unterprogramme. Sie ist eine schnelle statische Speichereinheit, weshalb sie mit der höchstmöglichen Verarbeitungsgeschwindigkeit des Mikroprozessors 10 arbeiten kann und in jedem Zyklus des Mikroprozessors eine Mikroinstruktion bereitstellt. Im folgenden wird ein Mikroprozessorzyklus oder eine Zykluszeit des Mikroprozessors als die Zeitspanne definiert, welche der Mikroprozessor 10 braucht, um eine Mikroinstruktion auszuführen und zur nächsten Mikroinstruktion, die ausgeführt werden soll, zuzugreifen. Die Speichereinheit 12 benötigt keine Zyklen für die Wiederauffrischung im Gegensatz zur Speichereinheit 14, weil statische Speicherzellen verwendet werden.

Die Speichereinheit 14 ist ein langsamer dynamischer Steuerspeicher. Die Leistung ist daher geringer als die der Speichereinheit 12. Die Speichereinheit 14 ist aus dynamischen Speicherzellen aufgebaut und braucht deshalb periodisch Zyklen zum Wiederauffrischen, um den Speicherinhalt zu erhalten. Die Speichereinheit 14 enthält daher auch Schaltungen für die Wiederauffrischung. Diese Schaltungen arbeiten unabängig vom Zustand des Mikroprozessors 10, das heisst also auch bei nicht eingeschaltetem Mikroprozessor. Während des Betriebes muss der Mikroprozessor 10 während der Zyklen für die Wiederauffrischung der Speichereinheit 14 gesperrt werden. Ein wesentlicher Gesichtspunkt der Erfindung ist die Fähigkeit der Einrichtung, den Mikroprozessor 10 auch so zu steuern, dass er zeitweilig die Ausführung von Mikroinstruktionen unterbricht, während die Wiederauffrischung der Speicherzellen der Speichereinheit 14 stattfindet, und dass er automatisch seine Tätigkeit wieder aufnimmt, wenn die Wiederauffrischung der langsamen Steuerspeichers beendet ist. Die Speichereinheiten 12 und 14 enthalten Register mit Steuerspeicherstellen. Die Anzahl der Steuerspeicherregister mag beispielsweise $2^{12}$ oder $2^{13}$ Speicherstellen insgesamt enthalten.

Die von den Speichereinheiten 12 und 14 über eine gemeinsame Signalleitung 18 ausgegebenen Mikroinstruktionen werden über eine Signalleitung 22 dem Steuerspeicher-Ausgaberegister, im folgenden kürzer Ausgaberegister 20 genannt, zugeführt. Das Ausgaberegister 20 erzeugt über die Steuersignalleitung 24 die Steuerimpulse zum Steuern der Zykluszeit des Mikroprozessors 10. Das Ausgaberegister 20 hält für die Dauer eines Mikroprozessorzyklus die von einer der Speichereinheiten 12 oder 14 aufgegebenen Instruktion fest, während welcher Zeit die laufende Instruktion ausgeführt wird und die nächstfolgende Instruktion für den Mikroprozessor 10 geholt wird. Die in der Ausführung befindliche laufende Instruktion enthält Adresseninformation für die nächste auszuführende Instruktion und bestimmt die Speicherstelle, von welcher der beiden Speichereinheiten 12 oder 14 die nächste Instruktion geholt werden muss. Die Arbeitsgeschwindigkeit des Mikroprozessors 10 während des Zyklus wird durch die Speicherstelle bestimmt, von der die nächste auszuführende Instruktion geholt werden muss. Die Zykluszeit des Mikroprozessors 10 wird durch den Inhalt des Adressenfeldes bestimmt, das in der laufenden, in dem Mikroprozessor 10 auszuführenden Mikroinstruktion für die nächstfolgende auszuführende Mikroinstruktion enthalten ist. Der Zyklus des Mikroprozessors 10 wird daher nicht durch die gerade ausgeführte Mikroinstruktion bestimmt oder durch die Arbeitsgeschwindigkeit der Speicherstelle, von welcher die laufende in Ausführung befindliche Mikroinstruktion geholt worden war, sei es von der Speichereinheit 12 oder 14. Dieses Verfahren, bei dem die Adresse der nächsten Mikroinstruktion bestimmt wird, bevor die laufende Mikroinstruktion ausgeführt ist, wird überschneidender Zugriff genannt.

Das Signal ''Nächste Adresse'' wird durch das Ausgaberegister 20 über die Signalleitung 30 an ein Steuerspeicher-Adressenregister, im folgenden kurz Adressenregister 32 genannt, ausgegeben. Das Adressenregister 32 hält für den Zugriff zu den Speichereinheiten 12 und 14 die Adresse fest, solange ein Zugriff erfolgt. Die Ausgabe des Adressenregister 32 wird als Signal "Adresse" über die Signalleitung 34 der Speichereinheit 12 und über die Signalleitung 36 der Speichereinheit 14 dargeboten. Eines oder mehrere der Bits höherer Ordnung des Signals "Adresse" vom Ausgaberegister 32 werden durch die Decodierschaltung 38 und die Zeitgebersteuerschaltung 42 dazu benutzt, zu bestimmen, zu welcher der Speichereinheiten 12 oder 14 der Zugriff wirklich erfolgt.

Angeschlossen an das Ausgaberegister 32 ist eine Decodierschaltung 38, um abhängig von der Anzahl der Speicherstellen in den Speichereinheiten 12 und 14 die Bits höherer Ordnung zu decodieren. Der Inhalt der Decodierschaltung 38 hängt daher von der relativen Grösse der Speichereinheiten 12 und 14 ab. Wenn beispielsweise in jeder der Speichereinrichtungen 12 und 14 4086 Speicherstellen vorhanden sind, dann vereinfacht sich die Decodierschaltung 38 zu einem einzelnen Inverter. Wenn das Ausgaberegister 32 13 Stellen hat, dann können in den Speichereinheiten 12 und 14 $2^{13}$ oder 8192 Speicherstellen adressiert werden. Das Bit höchster Ordnung des Ausgaberegisters 32 wird dann benutzt, um zwischen den 4096 Speicherstellen in der Speichereinheit 12 oder den 4096 Speicherstellen in der Speichereinheit 14 zu wählen. Die zwölf Bits niedriger Ordnung benennen die genaue Adresse in den Speichereinheiten 12 oder 14. Ueber die Signalleitung 40 wird eine Ausgabe der Decodierschaltung 38 der Zeitgebersteuerschaltung 42 zugeführt.

Die Zeitgebersteuerschaltung 42 erzeugt und steuert die für den Betrieb des Mikroprozessors 10 notwendigen Taktsignale, um die Zykluszeit des Mikroprozessors 10 dynamisch zu steuern. Die Zeitgebersteuerschaltung 42 erzeugt das Signal "Lade Adressenregister", das über eine Signalleitung 50 dem Adressenregister 32 zugeführt wird. Ausserdem erzeugt die Zeitgebersteuerschaltung 42 das Signal "Wahl langsam", das der langsamen Speichereinheit 14 über eine Signalleitung 52 zugeführt wird, und das Signal "Wahl schnell", das der Schnellen Speichereinheit 14 über eine Signalleitung 54 zugefuhrt wird. Ausserdem erzeugt die Zeitgebersteuerschaltung 42 das Signal "Lade Ausgaberegister", das dem Ausgaberegister 20 über eine Signalleitung 58 zugeführt wird. Wie später noch genauer beschrieben werden wird, bewirkt die Zeitgebersteuerschaltung 42 auch die Aufhebung der Ausführung einer Mikroinstruktion durch den Mikroprozessor 10 während eines Wiederauffrischungszyklus der Speichereinheit 14.

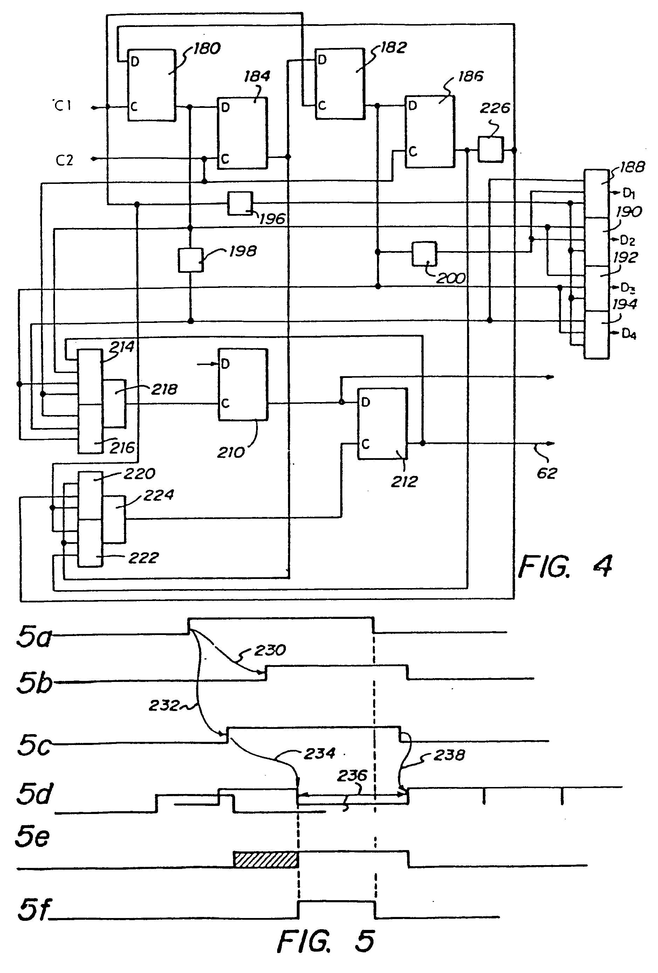

Die Steuerschaltung für die Wiederauffrischung der Speichereinheit 14 erzeugt das Signal "Erbitte Pause", welches der Zeitgebersteuerschaltung 42 über eine Signalleitung 60 zugeführt wird. Die Zeitgebersteuerschaltung 42 quittiert der Speichereinheit 14 mit dem Signal "Gebe Pause" über eine Signalleitung 62. Der Speichereinheit 14 werden über Signalleitungen 64 und 66 Signale D1 und D3 zugeführt, welche in Verbindung mit dem Zyklus für die Wiederauffrischung durch die Speichereinheit 14 gebraucht werden. Diese Arbeitsweise wird später in Verbindung mit der Fig. 4 beschrieben.

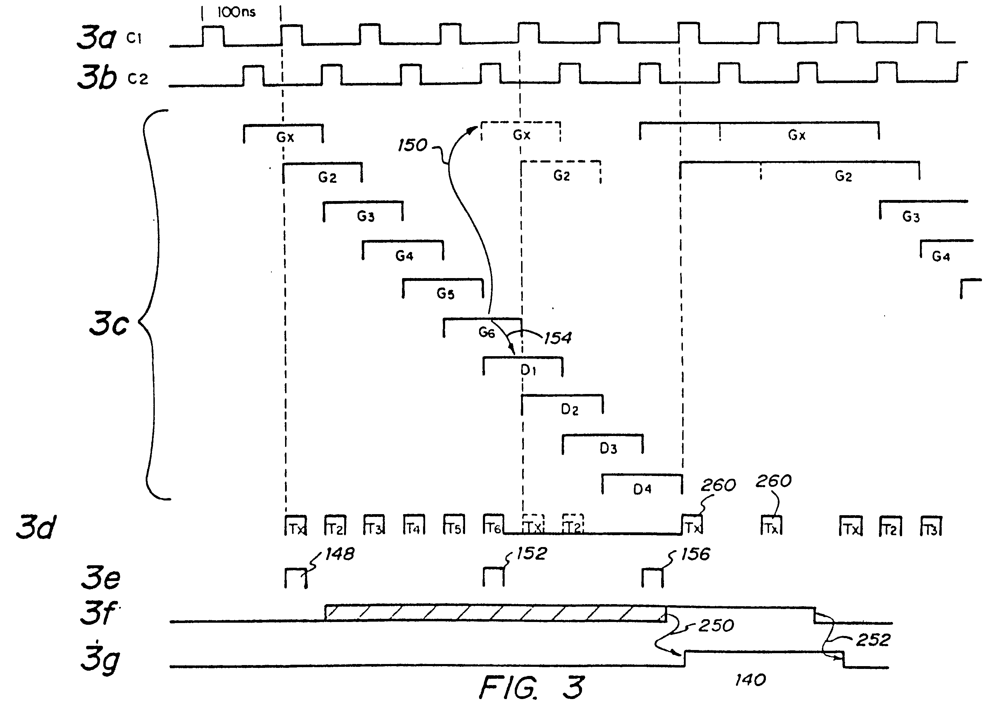

Die Zeitgebersteuerschaltung 42 erhält die von einem Oszilator 70 erzeugten Taktsignale C1 und C2. Die Taktsignale C1 und C2 sind je eine Folge von gleichabständigen Impulsen in zwei sich nicht überlappenden Phasen, wie in dern Figuren 3a und 3b dargestellt.

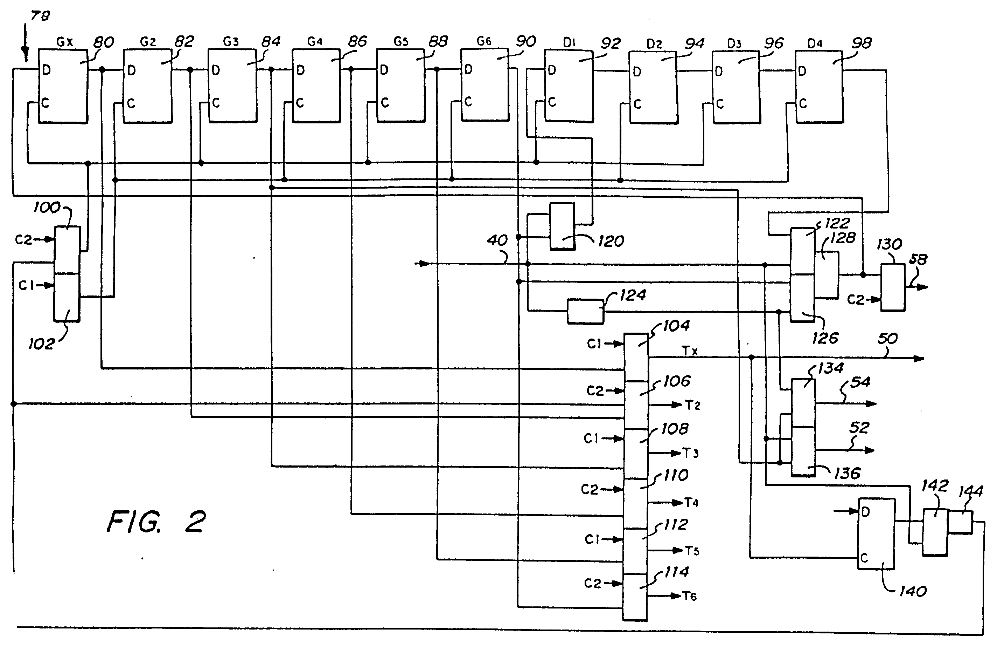

In der Fig. 2 ist ein Teil der Zeitgebersteuerschaltung 42 dargestellt. Die Schaltung enthält eine zehnstellige Ringschiebeschaltung 78. Die Ringschiebeschaltung 78 besteht aus einzelnen Schaltungen 80, 82, 84, 86, 88, 90, 92, 94, 96 und 98, die bistabile Schaltungen oder zweistellige Folgeschaltungen sind und zur Weitergabe von Impulsen dienen. Das Taktsignal C2 wird einem UND-Glied 100 zur Weitergabe und die bistabilen Schaltungen 80, 84, 88, 92 und 96 zugeführt. Das Taktsignal C1 wird einem UND-Glied 102 für die Weitergabe an die bistabilen Schaltungen 82, 86, 90, 94 und 98 zugeführt. Die Zuführung der Taktsignale C1 und C2 an die bistabilen Schaltungen 80—98 bewirkt, dass eine logische Eins die Ringschiebeschaltung 78 durchläuft, um Signale TX, T2, T3, T4, T5 und T6 zu erzeugen, welche die Taktsignale für den Mikroprozessor 10 bilden und in der Fig. 3d dargestellt sind.

Die Taktsignale für den Mikroprozessor werden dadurch erzeugt, dass man die Ausgangssignale der bistabilen Schaltungen 80—90 mit den abwechselnden Taktsignalen C1 und C2 über UND-Glieder ausgibt. Das Ausgangssignal der bistabilen Schaltung 80 wird zusammen mit dem Taktsignal C1 einem UND-Glied 104 zugeführt, um das Taktsignal TX für den Mikroprozessor zu erzeugen, was gleichzeitig ein Signal "Lade Adressenregister" darstellt, das über die Signalleitung 50 dem Adressenregister 32 zugeführt wird. Das Ausgangssignal de bistabilen Schaltung 82 wird zusammen mit dem Taktsignal C2 einem UND-Glied 106 zugeführt, welches das Taktsignal T2 für den Mikroprozessor erzeugt. Das Ausgangssignal der bistabilen Schaltung 84 wird zusammen mit dem Taktsignal C1 einem UND-Glied 108 zugeführt, welches das Taktsignal T3 für den Mikroprozessor erzeugt. Das Ausgangssignal der bistabilen Schaltung 86 wird einem UND-Glied 110 zugeführt, das zusammen mit dem Taktsignal C2 das Taktsignal T4 für den Mikroprozessor erzeugt, Das Ausgangssignal der bistabilen Schaltung 88 wird einem UND-Glied 112 zugeführt, welches zusammen mit dem Taktsignal C1 das Taktsignal T5 für den Mikroprozessor erzeugt. Das Ausgangssignal der bistabilen Schaltung 90 wird einem UND-Glied 114 zugeführt, das zusammen mit dem Taktsignal C2 das Taktsignal T6 für den Mikroprozessor erzeugt.

Das Signal "Langsamer Steuerspeicher", das durch die Decodierschaltung 38 erzeugt und über die Signalleitung 40 ausgegeben wird (Fig. 1), wird einem UND-Glied 120 zugeführt, das ebenso das Ausgangssignal der bistabilen Schaltung 90 empfängt. Das Ausgangssignal des UND-Gliedes 120 wird als Eingangssignal der bistabilen Schaltung 92 zugeführt. Das Signal "Langsamer Steuerspeicher" wird ebenfalls einem UND-Glied 122 zugeführt, das asserdem das Ausgangssignal der bistabilen Schaltung 98 erhält. Ueber einen Inverter 124 wird das Signal "Langsamer Steuerspeicher" in negierter Form einem UND-Glied 126 zugeführt. Die Ausgangssignale der UND-Glieder 122 und 126 gelangen an ein ODER-Glied 128, dessen Ausgangssignal dem Eingang der bistabilen Schaltung 80 zugeführt wird. Das Ausgangssignal des ODER-Gliedes 128 wird auch einem UND-Glied 130 zusammen mit dem Taktsignal C2 zugeführt, um das Signal "Lade Ausgaberegister" zu erzeugen und über die Signalleitung 58 auszugeben.

Das Ausgangssignal des Inverters 124 wird auch einem UND-Glied 134 zugeführt. Das Ausgangssignal der bistabilen Schaltung 84 wird dem UND-Glied 134 und dem UND-Glied 136 zugeführt. Das Ausgangssignal des UND-Gliedes 134 erzeugt das Signal "Schneller Steuerspeicher", das über die Signalleitung 54 der Speichereinheit 12 zugeführt wird. Das Signal "Langsamer Steuerspeicher" wird über die Signalleitung 40 dem UND-Glied 136 zugeführt, welches das Signal "Wahl langsamer Steuerspeicher" erzeugt und der Speichereinheit 14 über die Signalleitung 52 zuführt.

Das Ausgangssignal des UND-Gliedes 104 wird als Taktsignal einer bistabilen Schaltung 140 zugeführt, welche auch das Signal "Setze Sperre" erhält. Das Ausgangssignal der bistabilen Schaltung 140 wird einem UND-Glied 142 zugeführt, welches auch das Signal "Lang-samer Steuerspeicher" erhält. Das Ausgangs-signal des UND-Gliedes 142 wird einem Inverter 144 zugeführt, dessen Ausgangssignal einem UND-Glied 100 zugefuhrt wird, um die Lieferung des Taktsignales C2 an die bistabilen Schaltungen 80, 84, 88, 92 und 96 zu unterbinden. Das Ausgangssignal des Inverters 144 wird auch einem UND-Glied 106 zugeführt.

Die Erzeugung der Taktsignale für den Mikroprozessor 10 wird anhand der Figuren 2 und 3 erläutert. Das abwechselnde Schalten der bistabilen Schaltungen 80—90 durch die Taktsignale C1 oder C2 erzeugt die Signale GX, G2, G3, G4, G5 und G6 der Fig. 3c, welche nacheinander und mit einer geringfügigen Ueberlappung erzeugt werden. Jede der bistabilen Schaltungen 80—90, die entweder durch das Taktsignal C1 oder C2 geschaltet werden, hat die Fähigkeit, seinen Schaltzustand während der Taktzeit C1 oder C2 in einer Zeitspanne zu ändern, welche bei dem bevorzugten Ausführungsbeispiel 100 nsec beträgt. Wenn die bistabile Schaltung 80 durch das Taktsignal C2 geschaltet wird, entsteht das Signal GX, welches zusammen mit dem Taktsignal C1 durch das UND-Glied 104 durchgeschaltet wird, um das Taktsignal TX für den Mikroprozessor zu erzeugen (Fig. 3d). In dieser Weise wird eine unabhängige Folge von Taktsignalen für den Mikroprozessor 10 erzeugt, weil diese Taktsignale für den Mikroprozessor nicht durch die Taktsignale C1 und C2 des datenverarbeitenden Systems erzeugt werden, sondern sie werden als Antwort auf die Ausgangssignale einer bistabilen Schaltung erzeugt, die ihrerseits von den Taktsignalen C1 oder C2 geschaltet wird.

Die bistabilen Schaltungen 92, 94, 96 und 98 werden dazu benutzt, die Zykluszeit des Mikroprozessors 10 durch die Zugabe von vier Taktzeiten zu verlängern, was bei dem bevorzugten Ausführungsbeispiel 200 nsec zu dem Arbeitszyklus des Mikroprozessors zufügt, wenn dieser mit dem langsamen dynamischen Steuerspeicher 14 zusammenarbeitet. Die bistabilen Schaltungen 92, 94, 96 und 98 erzeugen nicht selbstständige Taktsignale für den Mikroprozessor 10, sondern sie werden vorzugsweise dazu benutzt, die Zykluszeit des Mikroprozessors 10 zu verlängern. Wenn während des Betriebes ein Zugriff zu dem schnellen statischen Steuerspeicher 12 erfolgt, erzeugt, das Ausgangssignal der bistabilen Schaltung 90 das Taktsignnal G6 und das UND-Glied 126 wird durch das Signal "Schneller Steuerspeicher" vorbereitet, um über das ODER-Glied 128 ein Eingangssignal an die bistabile Schaltung 80 zu liefern, um das Taktsignal GX zu erzeugen. Das Signal GX wird gebraucht, um das Taktsignal TX für den Mikroprozessor zu erzeugen und das impulsförmige Signal "Lade Adressenregister", wie es in der Fig. 3e bei 148 angedeutet ist.

Wenn das Signal "Schneller Steuerspeicher" nicht aktiv ist, dann wird die bistabile Schaltung 80 auch nicht vorbereitet, aber das UND-Glied 120 gibt ein Eingangssignal an die bistabile Schaltung 92. Das Eingangssignal zu der bistabilen Schaltung 92 verschiebt eine logische Eins durch die bistabilen Schaltungen 94, 96 und 98, deren Ausgangssignal einem UND-Glied 122 zugeführt wird, dessen anderer Eingang das Signal "Langsamer Steuerspeicher" ist. Das Ausgangssignal des ODER-Gliedes 128 schaltet die bistabile Schaltung 80 wieder in den aktiven Zustand. Deshalb wird das Ausgaberegister 20 durch die Zeitgebersteuerschaltung 42 während der Taktzeit G6 geladen während der Zugriff zum schnellen Steuerspei-cher 12 erfolgt, und das Durchlaufen der logischen Eins durch die Ringschiebeschaltung 28 kehrt zu der bistabilen Schaltung 80 zurück wie es in der Fig. 3c durch den Pfeil 150 angedeutet ist. Das impulsförmige Signal "Lade Ausgaberegister" für den Zugriff zum schnellen Steuerspeicher 12 ist in der Fig. 3e bei 152 angedeutet. Wenn dem UND-Glied 120 das Signal "Langsamer Steuerspeicher" zugeführt wird, dann bewirkt das UND-Glied 120, dass die logische Eins durch die bistabilen Schaltungen 92, 94, 96 und 98 fortgeschaltet wird, um die Impulse D1, D2, D3 und D4 zu erzeugen (vergleiche Pfeil 154 in Fig. 3e) so dass das Und-Glied 122 dann während der Taktzeit D4 vorbereitet ist, das impulsförmige Signal "Lade Ausgaberegister" bei 156 zu erzeugen (Fig. 3e) für einen Zugriff zum langsamen Steuerspeicher 14.

Es ist daraus zu ersehen, dass das Ausgangssignal des Adressenregisters 32 bestimmt, wie lang der Zyklus des Mikroprozessors 10 sein soll, weil die Bits höherer Ordnung der Adresse im Adressenregister 32 bezeichnen, ob der nächste Zugriff zur Speichereinheit 12 oder 14 erfolgen soll. Dementsprechend wird das Signal "Langsamer Steuerspeicher" erzeugt oder nicht und entsprechend der Zeitgebersteuerschaltung 42 zugeführt. Das Signal "Langsamer Steuerspeicher" steuert das Durchschalten der bistabilen Schaltung 92, so dass die logische Eins die ganze Ringschiebeschaltung 78 durchlaufen muss, bevor das Taktsignal TX für den Mikroprozessor erzeugt werden kann. Wenn der Zugriff zu einer Speicherstelle der Speichereinheit 14 erfolgt, durchläuft die logische Eins die Ringschiebeschaltung 78 von der bistabilen Schaltung 80 bis zur bistabilen Schaltung 98 und erzeugt so eine Zykluszeit für den Mikroprozessor von 500 nsec. Wenn der Zugriff zu einer Speicherstelle der Speichereinheit 12 erfolgt, dann durchläuft die logische Eins die bistabilen Schaltungen 80, 82, 84, 86 und 88 der Ringschiebeschaltung 78, wodurch eine Zykluszeit von 300 nsec für den Mikroprozessor entsteht.

Diese Arbeitsweise kann mit jedem Zyklus des Mikroprozessors 10 geändert werden, wenn Mikroinstruktionen abwechselnd anzeigen, dass der Zugriff zu aufeinanderfolgenden Mikroinstruktionen nacheinander sowohl von der Speichereinheit 12 als auch der Einheit 14 erfolgen soll. Die Zykluszeit des Mikroprozessors 10 wird nicht durch die gerade in Ausführung befindliche Mikroinstruktion bestimmt oder durch die Speicherstelle in einer der Speichereinheiten 12 oder 14, von welcher die Mikroinstruktion geholt worden war, die gerade aufgeführt wird. Die Zykluszeit des Mikroprozessors wird bestimmt durch den Inhalt des Adressenfeldes in der gerade auszuführenden Mikroinstruktion. Dieses Adressenfeld bestimmt die Speicherstelle in einer der Speichereinheiten 12 oder 14 für die nächstfolgende Mikroinstruktion, welche durch den Mikroprozessor 10 auszuführen ist.

Weil die Speichereinheit 14 ein dynamischer Steuerspeicher ist, verlangt er periodisch Wiederauffrischen der darin gespeicherten information. Während des Vorganges der Wiederauffrischung der Speichereinheit 14 muss das Verarbeiten von Mikroinstruktionen durch den Mikroprozessor 10 gesperrt oder unterbrochen werden, wenn der Zugriff zu diesen Mikroinstruktionen von der Speichereinheit 14 erforderlich ist, um die Zerstörung von Information zu vermeiden, die in der Speichereinheit 14 gespeichert ist. Es ist deshalb eine weitere Funktion der Zeitgebersteuerschaltung 42, den Betriebsablauf des Mikroprozessors 10 während eines Wiederauffrischungszyklus der Speichereinheit 14 zu sperren. Fig. 4 zeigt einen Teil der Zeitgebersteuerschaltung 42, welche in Verbindung mit der bistabilen Schaltung 140 (Fig. 2) gebraucht wird, um den Betriebsablauf des Mikroprozessors 10 zu sperren.

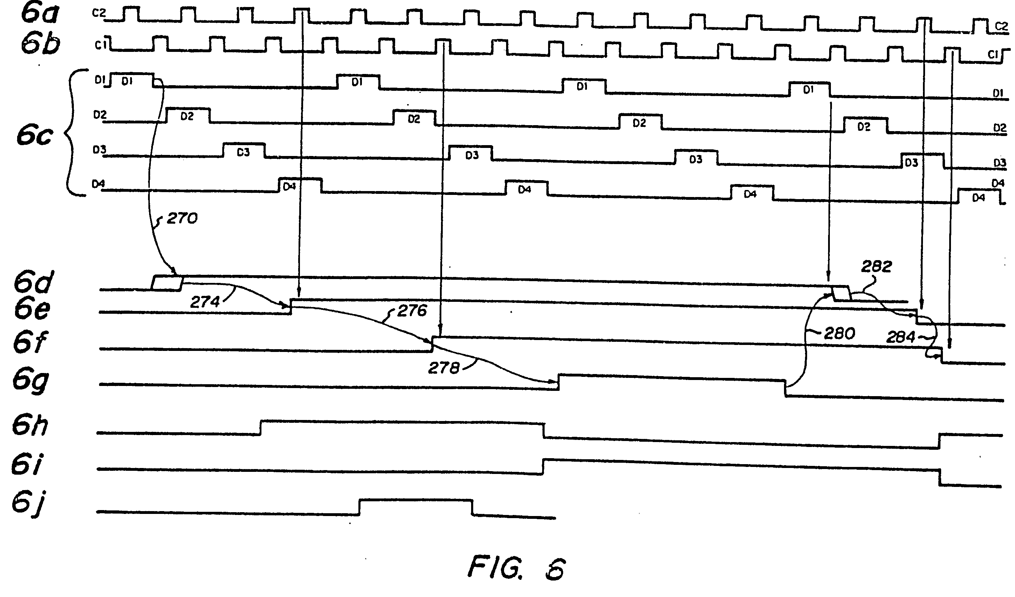

In der Fig. 4 werden die Taktsignale C1 des datenverarbeitenden Systems den bistabilen Schaltungen 180 und 182 zugeführt. Das Ausgangssignal der bistabilen Schaltung 180 wird an die bistabile Schaltung 184 gegeben, die als Eingangssignal an ihrem anderen Eingang das Taktsignal C2 des datenverarbeitenden Systems erhält. Das Ausgangssignal der bistabilen Schaltung 182 wird einer bistabilen Schaltung 186 zugeführt, welche an ihrem anderen Eingang das Taktsignal C2 erhält. Die bistabilen Schaltungen 180, 182, 184 und 186 arbeiten als zwei-stufiger Zähler zum Erzeugen von vier Taktsignalen D1, D2, D3 und D4 am Ausgang der UND-Glieder 188, 190, 192 und 194. Die Taktsignale D1—D4 werden nach anderen Gesichtspunkten für die Arbeitsweise den Mikroprozessors 10 und für Eingabe/Ausgabe — Einrichtungen gebraucht. Die Taktsignale D1—D4 sind, wie aus der Fig. 6c ersichtlich, etwas längere Taktimpulse als die Taktsignale C1 und C2 (Fig. 6a und 6b) des datenverarbeitenden Systems. Die Taktsignale D1, D2, D3 und D4 sind länger, weil Eingabe/Ausgabe-Kanäle, welche Eingabe/Ausgabe-Einrichtungen verbinden, nicht so schmale Impulse gebrauchen, wie es die Taktimpulse C1 und C2 sind. Die Taktsignale D1 und D3 werden in Verbindung mit den Schaltkreisen für die Steuerung der Wiederauffrischung der Speichereinheit 14 gebraucht und werden unten in Verbindung mit der Fig. 6 beschrieben.

Die Fig. 4 veranschaulicht die Erzeugung der Taktsignale D1—D4. Das Taktsignal C1 des Systems wird über einem Inverter 196 an jedes der UND-Glieder 188, 190, 192 und 194 gegeben. Das Ausgangssignal der bistabilen Schaltung 180 wird über einen Inverter 198 an die UND-Glieder 188 und 194 gegeben. Das Ausgangssignal der bistabilen Schaltung 182 wird über einen Inverter 200 an die UND-Glieder 188 und 190 gegeben. Das Ausgangssignal der bistabilen Schaltung 180 wird an die UND-Glieder 190 und 192 gegeben. Das Ausgangssignal der bistabilen Schaltung 182 wird an die UND-Glieder 192 und 194 gegeben.

Die bistabilen Schaltungen 180, 182, 184 und 186 werden auch durch die Zeitgebersteuerschaltung 42 gebraucht, um zwei Taktsignale zu erzeugen, welche an die bistabilen Schaltungen 210 und 212 gegeben werden. Die bistabile Schaltung 210 erzeugt das Signal "Setze Sperre", das eines der Eingangssignale der bistabilen Schaltung 140 (Fig. 2) ist. Die bistabile Schaltung 212 erzeugt das Signal "Gebe Pause" für die Weitergabe an die Speichereinheit 14 über die Signalleitung 62 (Fig. 1). Das Taktsignal für die bistabile Schaltung 210 wird durch die Zusammenarbeit der UND-Glieder 214 und 216 mit dem ODER-Glied 218 erzeugt. Das UND-Glied 214 erhält als Eingangssignale das Ausgangssignal der bistabilen Schaltung 212, das Ausgangssignal der bistabilen Schaltung 180, das Ausgangssignal der bistabilen Schaltung 182 und das Taktsignal C2 des datenverarbeitenden Systems. Das UND-Glied 216 erhält als Eingangssignale das Taktsignal C2, das Ausgangssignal des Inverters 198 und das Ausgangssignal der bistabilen Schaltung 182.

Das Taktsignal für die bistabile Schaltung 212 wird durch die Zusammenarbeit der UND-Glieder 220 und 222 mit einem ODER-Glied 224 erzeugt. Das UND-Glied 220 empfängt als Eingangssignale das Ausgangssignal der bistabilen Schaltung 186 über einen Inverter 226 und das Taktsignal C2 des datenverarbeitenden Systems. Das UND-Glied 222 empfangt als Eingangssignale das Taktsignal C2, das Ausgangssignal der bistabilen Schaltung 184 und das Ausgangssignal der bistabilen Schaltung 186.

Weil die Speichereinheit 14 ein sogenannter dynamischer Speicher ist und eine periodische Wiederauffrischung ihres Inhalts erfordert, kann der Zugriff zu einer ihrer Speicherstellen durch den Mikroprozessor 10 nicht gleichzeitig mit einer Operation der Wiederauffrischung erfolgen. Es ist deshalb notwendig, den Wiederauffrischungszyklys der Speichereinheit 14 gegen den Gebrauch der Speichereinheit 14 durch den Mikroprozessor 10 zu verriegeln. Dieser Verriegelungsmechanismus wird verwirklicht durch die Benutzung der Signale "Erbitte Pause", "Gebe Pause" und "Setze Sperre". Die Speichereinheit 14 senden das Signal "Erbitte Pause" kurz bevor die Zeit abläuft, in der eine Wiederauffrischung der Speichereinheit möglich ist. Das Signal wird an die bistabile Schaltung 210 (Fig. 4) gegeben, welche das Signal quittiert und an die Speichereinheit 14 das Signal "Gebe Pause" gibt, das durch die bistabile Schaltung 212 erzeugt wird.

Die Funktion der bistabilen Schaltung 210 besteht darin, die Betriebsweise des Mikroprozessors 10 und das Signal "Erbitte Pause" der Speichereinheit 14 zu synchronisieren. Weil ein Wiederauffrischungszyklus der Speichereinheit 14 und die Ausführung von Mikroinstruktionen durch den Mikroprozessor 10 asynchron zueinander auftreten, ist es notwendig, beide Operationen zu synchronisieren. Dies erfolgt durch den Gebrauch des Taktsignals C2 und der bistabilen Schaltungen 180 und 182 in Verbindung mit den UND-Gliedern 214 und 216 und dem OBER-Glied 218 um das Taktsignal für die bistabile Schaltung 210 zu erzeugen. Das Ausgangssignal der bistabilen Schaltung 210 erzeugt das Signal "Setze Sperre", das der bistabilen Schaltung 140 (Fig. 2) zugeführt wird. Das Ausgangssignal der bistabilen Schaltung 212 erzeugt das Quittungssignal "Gebe Pause", das zu der Speichereinheit 14 gesendet wird. Die Erzeugung des Signals "Gebe Pause" zeigt der Speichereinheit 14 an, dass die Synchronisation stattgefunden hat.

Das Zeitablaufdiagramm der Fig. 5 mit seinen Zeilen 5a bis 5f veranschaulicht die oben beschriebenen Operationen. Fig. 5a zeigt die Erzeugung des Signals "Erbitte Pause" durch die Speichereinheit 14. Der Pfeil 230 zeigt die Erzeugung des Quittungssignals "Gebe Pause" an die Speichereinheit 14 in der Fig. 5b an. In der Fig. 5c zeigt der Pfeil 232 die Erzeugung des Signals "Setze Sperre" und seine zeitliche Zuordnung zum Senden des Signals "Erbitte Pause". Die Fig. 5d veranschaulicht mögliche Zeitpunkte für die letzte Mikroinstruktion, bevor eine Wiederauffrischung angebahnt wird. Die Arbeit des Mikroprozessors 10 wird dann nach der fertigen Ausführung der laufenden Instruktion aufhören, was in der Fig. 5d durch den Pfeil 234 angedeutet ist. Der Pfeil 236 in der Fig. 5d zeigt die Zeitspanne, in welcher die Operation des Mikroprozessors 10 gesperrt ist für den Zugriff zu Mikroinstruktionen in der Speichereinheit 14.

Die Fig. 5e veranschaulicht die Zeit, in der der Mikroprozessor 10 im gesperrten Zustand ist und keinen Zugriff zur Speichereinheit 14 macht. Fig. 5f zeigt den Zyklus in welchem das Wiederauffrischen der Speichereinheit 14 stattfindet. Der Zyklus der Wiederauffrischung beginnt kurz nachdem das Signal "Gebe Pause" an die Speichereinheit 14 gegeben wurde, wie aus dem Vergleich der Figuren 5b und 5f ersichtlich ist. Das Signal "Gebe Pause", wird an die Speichereinheit 14 gesendet unabhängig von dem wirklichen Zeitpunkt, an welchem die Ausführung der Instruktion gesperrt wird, denn der Mikroprozessor 10 braucht auch gerade nicht zu arbeiten. Deshalb kann beispielsweise die bistabile Schaltung 140 nicht gesetzt sein. Nach Beendigung des Wiederauffrischungszyklus schaltet die Speichereinheit 14 das Signal "Erbitte Pause" ab, wie man aus dem Vergleich der Figuren 5a und 5f ersehen kann. Danach wird das Signal "Gebe Pause" abgeschaltet (Fig. 5b). Das Signal "Setze Sperre" fällt ab (Fig. 5c), um die bistabile Schaltung 140 abzuschalten. Die Ausführung von Mikroinstruktionen wird wieder aufgenommen, wie durch den Pfeil 238 in der Fig. 5c angedeutet ist, welche die zeitlichen Beziehungen zeigt zwischen dem Durchschalten der bistabilen Schaltung 140 für die Sperre und der Ausführung von Mikroinstruktionen in der Fig. 5d.

Die Erzeugung des Signals "Setze Sperre" und seine Weitergabe an die bistabile Schaltung 140 (Fig. 2) verhindert das Durchschalten des Taktsignales C2 des datenverarbeitenden Systemes an die bistabilen Schaltungen 80, 84, 88, 92 und 96 durch die Wirkung des UND-Gliedes 100. Das Blockieren des Taktsignales C2 zu diesen bistabilen Schaltungen verhindert die Weitergabe der logischen Eins durch die Ringschiebeschaltung 78 über die bistabile Schaltung 82 hinaus und verhindert so die Erzeugung der Taktsignale T3 bis T6 für den Mikroprozessor. Das Taktsignal T2 für den Mikroprozessor wird bei dem UND-Glied 106 durch die bistabile Schaltung 140 für die Sperre über den Inverter 144 unwirksam gemacht. Wie in der Fig. 3f gezeigt, kann das durch die bistabile Schaltung 210 (Fig. 4) erzeugte Signal "Setze Sperre" zu jeder Zeit eines Mikroprozessorzyklus erzeugt werden zwischen den Taktsignalen TX und T6 (Fig. 3d). Das Signal "Setze Sperre" wird jedoch nur quittiert zu Beginn der Taktzeit TX des Mikroprozessors, wie in der Fig. 3f durch den Pfeil 250 dargestellt ist, wenn die bistabile Schaltung 140 gesetzt ist. Wenn das Signal "Setze Sperre" abfällt, wird die bistabile Schaltung 140 für die Sperre abgeschaltet, wie in der Fig. 3g durch den Pfeil 252 angedeutet ist.

Weil der Schaltzustand der bistabilen Schaltung 140 (Fig. 1) zur ersten Taktzeit TX eines jeden Zyklus des Mikroprozessors 10 abgetastet wird, wird der Betriebsablauf des Mikroprozessors immer an der Grenze einer Mikroinstruktion gesperrt, wie in der Fig. 5d dargestellt ist. Wenn die bistabile Schaltung 140 zurückgestellt ist, nimmt der Mikroprozessor 10 seine Arbeitsabläufe an der gleichen Stelle auf, wo er vorher unterbrochen wurde. Die Operation der bistabilen Schaltung 140 für die Sperre erlaubt die fortlaufende Erzeugung der Taktsignale C1 und C2 des datenverarbeitenden Systems ohne Unterbruch, wie aus den Figuren 6a und 6b ersichtlich ist. Fig. 6c veranschaulicht die zeitliche Beziehung der Taktsignale D1, D2, D3 und D4, welche durch die UND-Glieder 188, 190, 192 und 194 der Fig. 4 erzeugt werden. Die Figuren 6d—6j veranschaulichen die zeitlichen Beziehungen zwischen den Signalen "Erbitte Pause", "Gebe Pause" und dem Zyklus für die Wiederauffrischung der Speichereinheit 14 zusätzlich zum Durchschalten der bistabilen Schaltung 140.

Für die Erklärung der Betriebsabläufe wird gleichzeitig auf die Figuren 3 und 6 Bezug genommen. Wenn die bistabile Schaltung 140 (Fig. 1) gesetzt wurde, wurde die bistabile Schaltung 80 (Fig. 2) durchgeschaltet, um das Taktsignal TX für den Mikroprozessor zu erzeugen, das in der Fig. 3d durch die Bezugszahl 260 bezeichnet ist. Weil die bistabile Schaltung 82 mittels des Taktsignales C1 geschaltet wird und weil die bistabile Schaltung 80 gesetzt ist, wird ebenso die bistabile Schaltung 62 während der Betätigung der bistabilen Schaltung 140 gesetzt. Das Taktsignal T2 für den Mikroprozessor wird während der Betätigung der bistabilen Schaltung 140 für die Sperre nicht erzeugt. Die bistabile Schaltung 82 wird abgeschaltet bei dem UND-Glied 106 durch die bistabile Schaltung 140 der Sperre über den Inverter 144, um die Erzeugung des Taktsignales T2 zu verhindern. Es kann daraus ersehen werden, dass das Setzen der bistabilen Schaltung 140 die Weitergabe von Taktsignalen an die bistabile Schaltung 180 verhindert und so das Verschieben der logischen Eins von der bistabilen Schaltung 82 zur bistabilen Schaltung 84 und zu allen folgenden bistabilen Schaltungen in der Ringschiebeschaltung 78 blockiert. Die bistabilen Schaltungen 80 und 82 werden jedoch gesetzt.

Weil die bistabilen Schaltungen 80 und 82 während der Betätigung der bistabilen Schaltung 140 gesetzt werden, wird das Taktsignal TX für den Mikroprozessor einmal zu zwei Taktzeiten anstatt einmal alle sechs Taktzeiten erzeugt, wenn die bistabile Schaltung 140 zurückgestellt ist. Deshalb hat die Ringschiebeschaltung 78 eine Zykluszeit von 100 nsec anstelle der 300 nsec, wenn das Taktsignal TX für den Mikroprozessor einmal alle sechs Taktzeiten erzeugt wird, wenn die bistabile Schaltung 140 zurückgestellt ist. Weil der Zyklus auf eine Laufdauer von 100 nsec geändert wird, wenn die bistabile Schaltung 140 eingeschaltet ist, kann der Mikroprozessor 10 mit minimaler Verzögerung wieder beginnen und die Ausführung von Mikroinstruktionen wieder aufnehmen. Durch Aenderung der Wiederholungsfrequenz des Taktsignales TX für den Mikroprozessor, wenn der Mikroprozessor 10 einmal angehalten wurde, kann die Abwesenheit der Betriebsbedingung, welche das Setzen der bistabilen Schaltung 140 für die Sperre verursachte, schnell erkannt werden, damit die Operationen des Mikroprozessors 10 wieder aufgenommen werden können.

Wie aus der Fig. 6 ersichtlich ist, erzeugt die Hinterflanke des Impulses D1 (Fig. 6c) das Signal "Erbitte Pause", was durch den Pfeil 270 dargestellt ist. Das Vorliegen des Signales "Erbitte Pause" gemeinsam mit dem Impuls D4 (Fig. 6c) und eines Taktsignales C2 des datenverarbeitenden Systemes (Fig. 6a) erzeugt das Signal "Setze Sperre", dargestellt durch den Pfeil 274. Das Signal "Gebe Pause" wird von dem Taktsignal des datenverarbeitenden Systems (Fig. 6d) erzeugt und wird in der Fig. 6f durch den Pfeil 276 angezeigt. Der Zyklus für die Wiederauffrischung beginnt, wie in der Fig. 6g durch den Pfeil 278 angezeigt, kurz nach dem die letzte langsame Mikroinstruktion ausgeführt wurde, was in der Fig. 6h dargestellt ist.

Während des Zyklus für die Wiederauffrischung (vgl. Fig. 6g) wird der Zugriff zu schnellen Mikroinstruktionen erlaubt, wie in der Fig. 6h während des Zeitraumes dargestellt ist, in welchem die bistabile Schaltung 140 gesetzt ist (Fig. 6i). Bei dem UND-Glied 142 wird durch das Signal "Langsamer Steuerspeicher" ermöglicht, dass die bistabile Schaltung 140 für die Sperre wirksam wird, um die Taktsignale T2—T6 für den Mikroprozessor nicht weiter zu schalten. Wenn Zugriff zum schnellen Steuerspeicher erfolgt, werden die Taktsignale nicht weiter geschaltet. Die Fig. 6j veranschaulicht den Impuls für das letzte Signal "Wahl langsamer Steuerspeicher" vor dem Wiederauffrischen und während der Ausführung der letzten Mikroinstruktion. Nachdem die Wiederauffrischung beendet ist, wird das Signal "Erbitte Pause" abgeschaltet, wie es in der Fig. 6d durch den Pfeil 280 bezeichnet wird. Während des Auftretens eines Taktsignales C2 (Fig. 6a) und dem nächsten Taktsignal D3 (Fig. 6c), wird die bistabile Schaltung 140 abgeschaltet. wie in der Fig. 6e durch den Pfeil 282 angedeutet ist. Beim nächsten Taktsignal C1 des datenverarbeitenden Systems (Fig. 6b), das dem Taktsignal D3 folgt, wird das Signal "Gebe Pause" abgeschaltet wie in der Fig. 6f durch den Pfeil 284 bezeichnet ist. Das Abschalten des Signales "Setze Sperre" und das Zurückstellen der bistabilen Schaltung 140 (Fig. 6i) erlaubt dem Mikroprozessor 10, erneut Mikroinstruktionen von der Speichereinheit 14 zu holen, wie in der Fig. 6h dargestellt ist. Wie in den Figuren 5d und 6h dargestellt ist, kann der Mikroprozessor 10 während eines Zyklus für die Wiederauffrischung der Speichereinheit 14 fortfahren, Mikroinstruktionen auszuführen, die von der Speichereinheit 12 geholt wurden. Das ist möglich durch die Arbeitsweise des Signales "Wahl schneller Steuerspeicher", das während eines Zyklus für die Wiederauffrischung erzeugt wurde.

Die Einrichtung nach der Erfindung verstellt automatisch die Zykluszeit eines Mikroprozessors, um sie an die Arbeitsgeschwindigkeit eines Steuerspeichers anzupassen, zu dem gerade der Zugriff erfolgt. Die Ausführung von Mikroinstruktionen wird zeitweilig unterbrochen, wenn der Zugriff zu einem langsamen Steuerspeicher erfolgt, der ein sogenannter dynamischer Speicher ist und periodisch eines Zyklus für die Wiederauffrischung seines Speicherinhaltes bedarf. Die Einrichtung erlaubt auch den Mikroprozessor auf eine asynchrone Anforderung des langsamen Steuerspeichers zu reagieren und erlaubt gleichzeitig dem Hauptspeicher, dem Kanal und anderen Einheiten, welche mit dem Mikroprozessor verbunden sind, ihre Arbeitsabläufe fortzuführen, während die Ausführung von Mikroinstruktionen vom langsamen Steuerspeicher gesperrt ist, weil gerade ein Zyklus für die Wiederauffrischung des langsamen Steuerspeichers stattfindet.

### Patentansprüche

1. Einrichtung zur Steuerung der Zykluszeit für einen Mikroprozessor mit Steuerspeichern unterschiedlicher Verarbeitungsgeschwindigkeit in einem datenverarbeitenden System, wobei mindestens ein schneller Steuerspeicher (12) und mindestens ein langsamer Steuerspeicher (14), der periodisch einer Wiederauffrischung seines Speicherinhaltes bedarf, vorgesehen sind, und wobei eine Zeitgeberschaltung vorhanden ist zur Abgabe von Impulsen in unterschiedlichen, wählbaren Zeitintervallen, dadurch gekennzeichnet, dass die Zeitgeberschaltung (42, Fig. 1; Fig. 2)

a) bei Anzeige eines Zugriffs zum schnellen Speicher durch ein Auswahlsignal (40), das aus einer in einem Register (32) vorliegenden Adresse abgeleitet ist, eine Impulsfolge in einem Normalzeitintervall abgibt, unabhängig vom Zustand des langsamen Speichers,

b) bei Anzeige eines Zugriffs zum langsamen Speicher durch das aus einer vorliegenden Adresse abgeleitete Auswahlsignal (40) und Nicht-Vorliegen einer Auffrisch-Anforderung eine Impulsfolge in einem verlängerten Zeitintervall abgibt, und

c) bei Anzeige eines Zugriffs zum langsamen Speicher durch das aus einer vorliegenden Adresse abgeleitete Auswahlsignal (40) und Vorliegen einer Auffrisch-Anforderung Einzelimpulse (240) nacheinander abgibt in Intervallen, welche kürzer als das Normalzeitintervall sind, wobei diese Einzelimpulse zur Abfrage des Auffrischungszustandes benutzt werden können, um nach dessen Beendigung eine baldige Wiederaufnahme der Abgade von Impulsfolgen zu ermöglichen.

2. Einrichtung nach Anspruch 1, dadurch gekennzeichnet, dass im Falle (c) die Zeitgeberschaltung (42, Fig. 1; Fig. 2) nach Beendigung der Auffrischung, beginnend mit dem nächsten Einzelimpuls, eine Impulsfolge in einem verlängerten Zeitintervall abgibt.

3. Einrichtung nach Anspruch 1 oder 2, dadurch gekennzeichnet, dass die Zeitgeberschaltung (42) Schaltelemente (Fig. 4) aufweist, welche bei Anzeige eines Zugriffs zum langsamen Speicher und bei Vorliegen einer Auffrisch-Anforderung mit dem Schlussimpuls (TX) des laufenden Normalzeitintervalls oder verlängerten Zeitintervalls, welcher gleich dem ersten der Einzelimpulse ist, ein Sperrsignal (SETZE SPERRE) für den Mikroprozessor (10) aktivieren, und dieses beim letzten Einzelimpuls bei Beendigung der Auffrischung, welches gleich dem Startimpuls des beginnenden verlängerten Zeitintervalls ist, deaktivieren.

4. Einrichtung nach Anspruch 1 oder 2, dadurch gekennzeichnet, dass die Zeitgeberschaltung (42, Fig. 1; Fig. 2) zur Anpassung der Zykluszeiten mit zwei alternierenden Taktsignalen (C1. C2) arbeitet, welche die Stufen eines Schieberegisters (80...98) nacheinander selektiv aktivieren, wobei die Anzahl jeweils benutzter Stufen durch Speicherzugriffs-Anzeigesignale gesteuert wird, und dass die Zeitgeberschaltung Elemente (100, 140, 142, 144) aufweist, um eines der Taktsignale (C2) bei Vorliegen der Anzeige eines Zugriffs zum langsamen Speicher und bei Vorliegen einer Auffrisch-Anforderung ab dem nächsten Zeitintervall-Schlussimpuls (TX) zu sperren, so dass die Weiterschaltung des Schieberegisters unterbrochen wird.

5. Einrichtung nach Anspruch 1, dadurch gekennzeichnet, dass die Zeitgeberschaltung (42, Fig. 1) das Auswahlsignal (40) erhält von einer Decodierschaltung (38), welche mit dem Ausgang eines Steuerspeicher-Adressenregisters (32) verbunden ist, das seinerseits aus einem Ausgaberegister (20) der Steuerspeicher (12, 14) geladen wird.

**Revendications**

1. Dispositif de contrôle du cycle d'un microprocesseur comportant des mémoires de commande à différentes vitesses de traitement dans un système de traitement de données, comprenant au moins une mémoire de commande rapide (12) et au moins une mémoire de commande plus lente (14) dont le contenu doit être mis à jour périodiquement, et comprenant encore un circuit d'horloge pour la génération d'impulsions à des intervalles de temps différents, caractérisé en ce que le circuit d'horloge (42, figure 1; figure 2):

a) transmet une séquence d'impulsions à intervalles de temps normaux, lorsqu'un accès à la mémoire rapide est indiqué par un signal de sélection (40) dérivé d'une adresse disponible, dans un registre (32), ceci indépendamment de l'état de la mémoire lente,

b) transmet une séquence d'impulsions à intervalles de temps plus longs, lorsqu'un accès à la mémoire lente est indiqué par un signal de sélection (40) dérivé d'une adresse disponible, et qu'existe aucune demande de rafraîchissement,

c) transmet successivement des impulsions isolées (240) à intervalles inférieurs à l'intervalle de temps normal pour demander l'état de rafraîchissement, afin de permettre une reprise rapide de la transmission desdites séquences d'impulsions; lorsqu'un accès à la mémoire lente est indiqué par un signal de sélection (40) dérivé d'une adresse disponible, alors qu'il existe une demande de rafraîchissement.

2. Dispositif suivant la revendication 1 caractérisé en ce que le circuit d'horloge (42, figure 1; figure 2), dans le cas c), transmet, dès la fin du rafraîchissement, et en commençant par l'impulsion isolée suivante, un train d'impulsions à intervalles de temps prolongés.

3. Dispositif selon la revendication 1 ou 2, caractérisé en ce que le circuit d'horloge (42) comporte des élements de commutation (figure 4), pour activer, en cas d'accès à la mémoire lente et en présence d'une demande de rafraîchissement, avec l'impulsion finale (TX) pour l'intervalle de temps normal ou l'intervalle de temps prolongé, ladite impulsion étant égale à la première des impulsions isolées, un signal de blocage (POSTIONNER BLOCAGE) destiné au microprocesseur (10); et pour désactiver ledit signal lors de la dernière impulsion isolée à la fin du rafraîchissement, jour, cette dernière impulsion étant l'impulsion de démarrage des intervalles de temps prolongés qui commencent.

4. Dispositif suivant la revendication 1 ou 2, caractérisé en ce que le circuit d'horloge (42, figure 2) fonctionne au moyen de deux signaux d'horloge alternant (C1, C2) pour adapter les temps de cycle, lesdits signaux d'horloge activnat successivement et sélectivement les étages d'un registre à décalage (80...98), le nombre d'étages utilisés dans un cycle quelconque étant déterminé par les signaux d'accès à la mémoire, et en ce que le circuit d'horloge comporte des éléments (100, 140, 142, 144) pour bloquer, l'un des signaux d'horloge (C2) à partir de l'impulsion délimitant le cycle suivant (TX), lorsqu'un signal d'accès à la mémoire lente est indiqué et qu'une demande de rafraîchissement est en attente, si bien que l'avancement du registre de décalage est interrompu.

5. Dispositif suivant la revendication 1, caractérisé en ce que le circuit d'horloge (42, figure 1) reçoit le signal de sélection (40) d'un circuit de décodage (38), qui est relié à la sortie d'un registre d'adresses (32) de mémoire de commande, ledit registre d'adresses étant chargé par un registre de sortie (20) de mémoires de commande (12, 14).

**Claims**

1. Apparatus for controlling the cycle time of a microprocessor having control stores of different speed, in a data processing system, at least one fast control store (12) and at least one slow control store (14) which requires periodic refreshing of its contents being provided, and timing circuitry being provided for furnishing pulses in different selectable intervals, characterized in that said timing circuitry (42, Fig. 1; Fig. 2)

a) furnishes, when access to the fast store is indicated by a selection signal (40) which is derived from an address available in a register (32) a pulse sequence in a normal time interval, independent of the status of the slow store,

b) furnishes, when access to the slow store is indicated by said selection signal (40) derived from an available address and when no refreshing is requested, a pulse sequence in an extended time interval, and

c) furnishes, when access to the slow store is indicated by said selection signal (40) derived from an available address and when refreshing is requested, sequential individual pulses (240) in intervals which are shorter than the normal time interval, said individual pulses providing a possibility to sample the refreshing state, for enabling after its termination a fast rewrite of the impulse sequence produced.

2. Apparatus in accordance with claim 1, characterized in that in case (c), said timing circuitry (42, Fig. 1; Fig. 2) furnishes, after the refreshing is completed, a pulse sequence in said extended time interval.

3. Apparatus in accordance with claim 1 or 2,

**0 010 193**

characterized in that said timing circuitry (42) comprises elements (Fig. 4) which, when access to the slow store is indicated and when refreshing is requested, activates with the final pulse (TX) of the current normal time interval or extended time interval, which is equal to the first one of the individual pulses, an inhibit signal for the microprocessor (10), and which deactivates this signal with the last one of the individual pulses when the refreshing is completed, which is equal to the starting pulse of the beginning extended time interval.

4. Apparatus in accordance with claim 1, 2 or 3, characterized in that said timing circuitry (42, Fig. 1; Fig. 2) operates, for adjusting the cycle time, with two alternating clock signals (C1, C2) which sequentially and selectively activate the stages of a shift register (80 . . . 98), the number of stages used in any one cycle being determined by access indicator signals, and that said timing circuitry comprises elements (100, 140, 142, 144) for inhibiting, when an access to the slow store is indicated and a refreshing request is pending, one of the clock signals (C2) with the next cycle delimiting pulse (TX), so that advancing of the shift register is interrupted.

5. Apparatus in accordance with claim 1, characterized in that said timing circuitry (42, Fig. 1) receives said selection signal (40) from a decoding circuit (38) which is connected to the output of a control store address register (32) which is loaded from an output register (20) of the control stores (12, 14).

FIG. 1

FIG. 2

FIG. 3

3a C1

3b C2

3c

3d

3e

3f

3g

100ns

Gx G2 G3 G4

Gx G2

Gx G2 G3 G4 G5 G6

D1 D2 D3 D4

150 154

148 152 156

Tx T2 T3 T4 T5 T6 Tx T2 Tx T2 Tx T3

260 260 260

250 252

140

0010193

FIG. 4

FIG. 5

4

FIG. 6